# EUROPEAN PATENT APPLICATION

(11) **EP 1 571 486 A1**
(43) Date of publication of application: **07.09.2005**
(21) Application number: 05004129.2
(22) Date of filing: 25.02.2005
(51) Int. Cl.: G02F 1/13357, H04M 1/02

(54) **Double-faced lighting device**

(30) Priority: 25.02.2004 JP 2004049847
(71) Applicant: Citizen Electronics Co., Ltd., Yamanashi-ken (JP)
(72) Inventor: Shimura, Takashi, Fujiyoshida-shi Yamanashi-ken (JP)
(74) Representative: Grünecker, Kinkeldey, Stockmair & Schwanhäusser Anwaltssozietät

(57) **Abstract**

A case is provided for mounting an electronic equipment (1) such as a potable telephone. The case has a first display panel (2) and a second display panel (3) provided on both sides thereof and disposed back to back. A light guide plate (8) is provided in the case, the light guide plate has light emitting surfaces on both sides thereof, and light sources (10) are provided at one of sides of light guide plate. The light sources are divided into a first light source (10a) for the first display panel (2) and a second light source (10b) for the second display panel (3). An electric current supply circuit is provided for independently supplying electric current to the first light source and to the second light source.

## Description

### BACKGROUND OF THE INVENTION

The present invention relates to a double-faced lighting device which emits light from both sides thereof. The lighting device is disposed between liquid crystal displays (LCD) which are disposed back to back, thereby lighting the LCDs as backlight.

In recent years, an LCD lighting device having a thin thickness is widely used as a lighting device for various electronic equipments such as a personal computer, video game machine, and portable telephone. There is provided an electronic equipment in which two LCDs are disposed back to back so as to set the display panels on both sides of a case.

Heretofore, various backlight devices, each having a thin thickness and a uniform brightness are disclosed. In such a backlight device, two sets of lighting units are used for back-lighting both LCDs, so that the number of parts increases, thickness of lighting device and steps of assembling increase, raising the cost of the lighting device. Moreover, since each of the lighting unit is provided with exclusive light source such as an LED (light emitting diode), a large power consumption is required.

In order to resolve such a disadvantage, there has been proposed in Japanese Patent Application No. 2003-289506) an electronic equipment provided with an electronic equipment having a large display panel of an LCD and a small display panel of another LCD. Both the display panels are disposed back to back and overlapped in the optical axis. A lighting device is provided between the display panels. The lighting device comprises a transparent rectangular light guide plate having small wrinkles or dots on the upper and lower surfaces thereof for diffusing light, and a plurality of light sources comprising LEDs disposed at one of short sides of the light guide plate. Brightness enhancement films are provided between the light guide plate and the large display panel, and between the light guide plate and the small display panel, each having a size corresponding to the size of the opposite display panel. On the side facing the light guide plate of each of the brightness enhancement films a plurality of microlenses disposed in parallel are formed. A light absorbing sheet having black color is disposed between the lighting guide plate and the small display panel. The light absorbing sheet has a size substantially the same as that of the large display panel and has an aperture corresponding to the small display panel. The light absorbing sheet has a function to absorb incident lights.

In the above described conventional double-faced lighting device, six LEDs are provided, for example. In order to illuminate the small LCD, all six of the LEDs must be turned on, same as in the case of illuminating the large LCD. Accordingly, the power consumption is large.

In addition, since the size of the brightness enhancement film for the small LCD is smaller than that of the brightness enhancement film for the large LCD, a reflection of the small brightness enhancement film may project on the large display panel. Thus, the large and small LCDs cannot be evenly back-lighted.

### SUMMARY OF THE INVENTION

An object of the present invention is to provide a lighting device the power consumption of which is decreased.

According to the present invention, there is provided a double-faced lighting device comprising a case having a first display panel and a second display panel provided on both sides thereof and disposed back to back, a light guide plate provided in the case and having light emitting surfaces on both sides thereof, light sources provided at one of sides of light guide plate, the light sources being divided into a first light source for the first display panel and a second light source for the second display panel, an electric current supply circuit for independently supplying electric current to the first light source and to the second light source.

Each of the light sources comprises an LED, and one of LEDs in the second light source is disposed between LEDs of the first light source.

The electric current supply circuit includes a first switch and a second switch, both the switches are operated by opening and closing of the case for supplying electric currents to the first and second light sources respectively.

The lighting device further comprises brightness enhancement films disposed between the first display panel and the light guide plate, and between the second display panel and the light guide plate, each of the brightness enhancement film has a size which is substantially equal to a size of the light guide plate.

The lighting device further comprises a light absorbing sheet disposed between the second display panel and the brightness enhancement film, and the light absorbing sheet having an aperture which has a size substantially equal to a size of the second display panel.

Each of the brightness enhancement films has a plurality of prisms on a surface corresponding to the light guide plate, and the light absorbing sheet has a black color.

Each of the brightness enhancement films comprises two stacked films in which prisms on both films are elongated in perpendicular directions with each other.

The lighting device further comprises a semi-transmission reflection sheet provided between the first display panel and the light guide plate.

The semi-transmission reflection sheet is a half-silvered mirror sheet.

The semi-transmission reflection sheet is a white diffusion sheet.

These and other objects and features of the present invention will become more apparent from the following detailed description with reference to the accompanying drawings.

### BRIEF DESCRIPTION OF DRAWINGS

Fig. 1a is a sectional side view showing an electronic equipment provided with a lighting device according to a first embodiment of the present invention;
Fig. 1b is an enlarged side view of a part A of Fig. 1a;
Fig. 2 is a perspective view of surface-mounted LEDs and a light guide plate in the lighting device of the present invention;
Fig. 3 is a perspective view of surface-mounted LEDs and a light guide plate in the lighting device of a second embodiment of the present invention;
Fig. 4a are diagrams showing various arrangement of the LEDs in the lighting device of the first embodiment;
Fig. 4b shows a circuitry of the LEDs of Fig. 4a;
Fig. 5a are diagrams showing various arrangement of the LEDs in the lighting device of the second embodiment;
Fig. 5b shows a circuitry of the LEDs of Fig. 5a;
Figs. 6a to 6c are diagrams explaining the operation for illuminating a small display panel of the present invention;
Fig. 7 is a sectional side view of an electronic equipment provided with a lighting device of a third embodiment of the present invention;
Fig. 8 is a sectional side view of an electronic equipment provided with a lighting device of a fourth embodiment of the present invention; and
Fig. 9 is a sectional side view of an electronic equipment provided with a lighting device of a fifth embodiment of the present invention.

### DETAILED DESCRIPTION OF THE PREFERRED EMBODIMENT

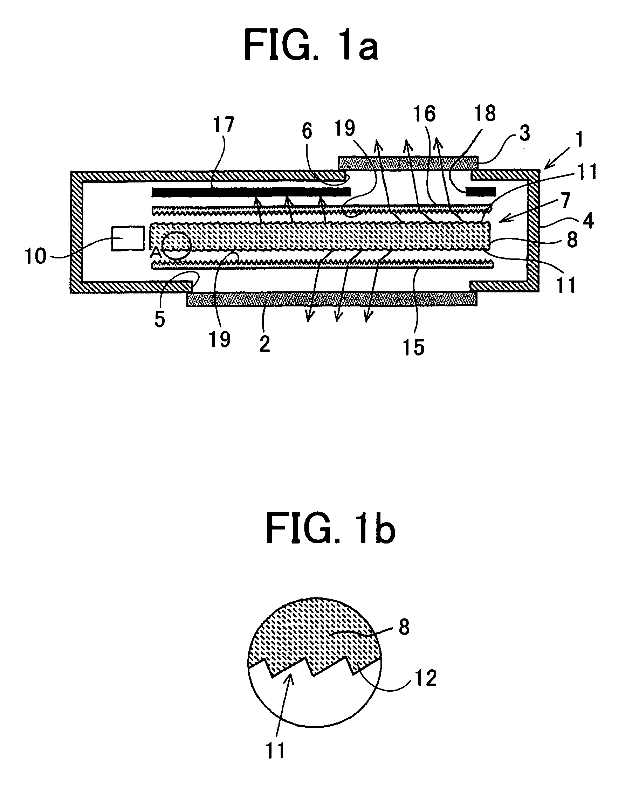

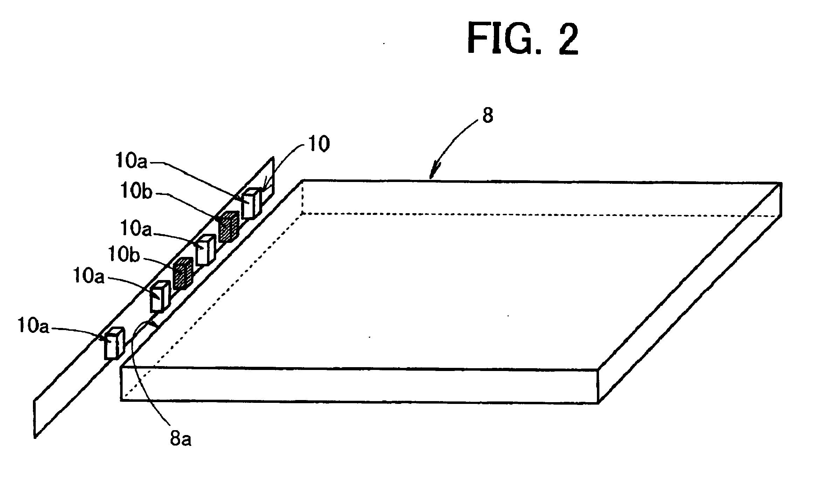

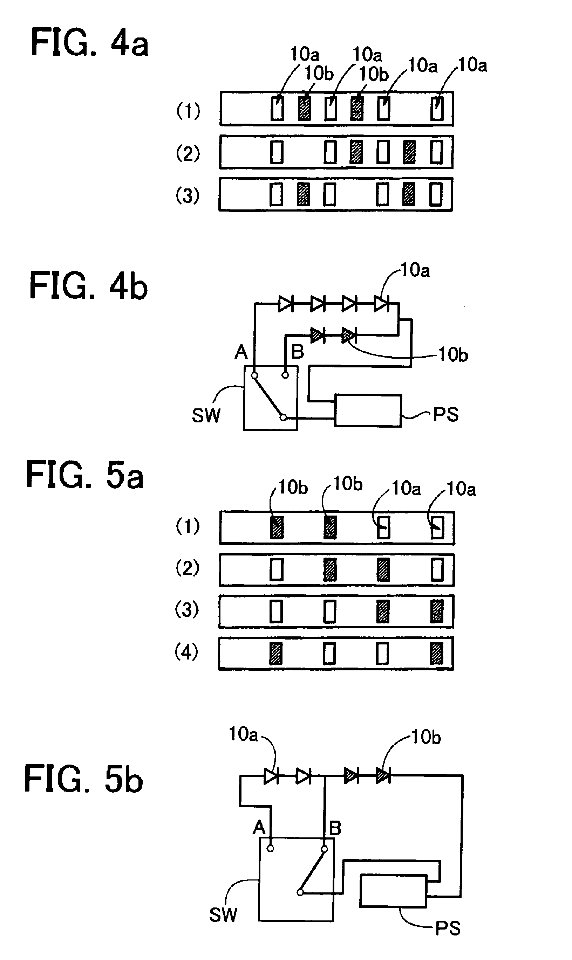

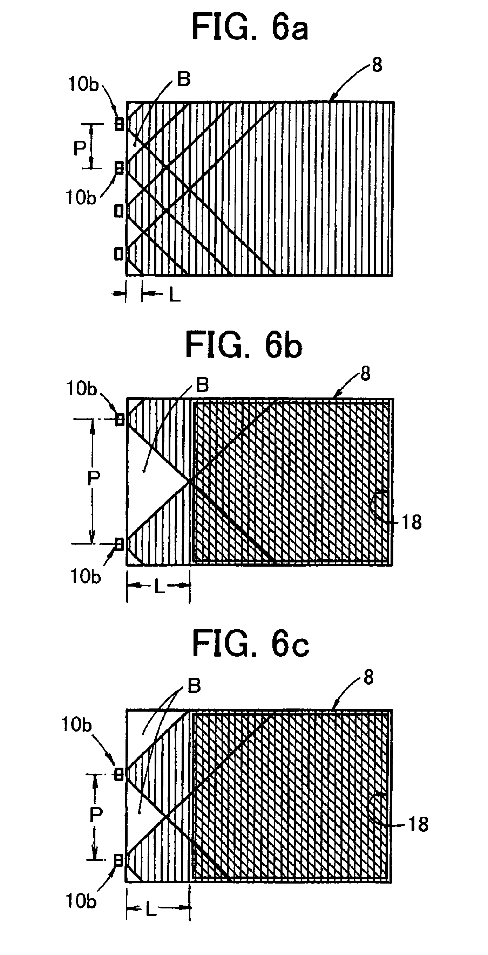

Fig. 1a is a sectional side view showing an electronic equipment provided with a lighting device according to a first embodiment of the present invention, Fig. 1b is an enlarged side view of a part A of Fig. 1a, Fig. 2 is a perspective view of surface-mounted LEDs and a light guide plate provided in the lighting device, Fig. 4a shows an arrangement of the LEDs, Fig. 4b shows a circuitry of the LEDs, and Figs. 6a to 6c show the arrangement of the LEDs and a light emitting area on the light guide plate, especially for illuminating a second display panel or a small display panel as an embodiment of the present invention.

The electronic equipment 1 such as a portable telephone has a large display panel 2 of an LCD and a small display panel 3 of another LCD mounted on a case 4 at apertures 5 and 6 respectively. The small display panel 3 has a display area smaller than that of the large display panel 2. Both the display panels 2 and 3 are disposed back to back and overlapped in the optical axis.

The lighting device 7 of the present invention comprises a light guide plate 8 having a rectangular shape in plan view, made of a transparent resin and supported in the case 4, and a plurality of light sources comprising LEDs 10 disposed at a predetermined interval at one of short sides of the rectangular light guide plate 8. On at least one of the upper and lower surfaces of the light guide plate 8, reflecting surfaces 11 are formed. Each of the reflecting surfaces comprises a plurality of scalene microprisms 12 of a predetermined inclination angle as shown in Fig. 1b. The reflecting surfaces 11 may be formed of a plurality of small wrinkles or dots, or by prints.

Brightness enhancement films 15 and 16 made of PET are provided between the lower surface of the light guide plate 8 and the large display panel 2, and between the upper surface of the light guide plate 8 and the small display panel 3. Each of the brightness enhancement films 15 and 16 has substantially the same area size as that of the light guide plate 8. On the side facing the light guide plate 8 of each of the brightness enhancement films 15, 16, a plurality of prisms 19 are formed for increasing the intensity of light.

A light absorbing sheet 17 is disposed between the light guide plate 8 and the small display panel 3. The light absorbing sheet is made of PET and has black color. The light absorbing sheet 17 has a size substantially the same as that of the large display panel 2 and has an aperture 18 opposite the small display panel 3. The light absorbing sheet 17 has a function to absorb incident lights.

Referring to Fig. 2, an even number of LEDs 10, for example, six in the present embodiment, is provided in the electronic equipment 1. Of the six LEDs, four LEDs 10a are for the large display panel 2 and two LEDs 10b are for the small display panel 3. The LEDs 10b are disposed between the LEDs 10a.

Figs. 4a shows examples (1), (2), (3) of the arrangement of the LEDs 10a and 10b. As shown in Fig. 4b, the sets of LEDs 10a and 10b is connected to a power source PS through a switch SW. Accordingly, a contact A is closed when the case 4 is opened for illuminating the large display panel 2, so that the four LEDs 10a are operated to emit light. When the case 4 is closed, the contact B is closed, so that the two LEDs 10b are operated to illuminate the small display panel 3. The connection shown in Fig. 4b is just an example. If six LEDs here are used in the connection shown in Fig. 5b, all six LEDs can be used to illuminate the large display panel. Therefore, the connection shown in Fig. 5b may be more effective.

The illumination of the small display panel 3 is described hereinafter with reference to Figs. 6a to 6c.

If four LEDs 10b for the small display panel 3 are disposed equidistantly as shown in Fig. 6a, there are formed small dark areas B between the adjacent LEDs 10b when the LEDs are turned on. However, since only two LEDs 10b are used in the present embodiment as shown in Figs. 6b and 6c, the areas B between the LEDs are increased. Since the area of the small LCD 3 is smaller than that of the large LCD 2, it is possible to eliminate the influence of the dark areas B by determining appropriate position and size of the aperture 18 of the light absorbing sheet 17. Experiences have shown that a pitch P between the LEDs 10b is substantially equal to a length L of the dark area B. Accordingly, the aperture 18 is envisioned as a maximum size for the small display panel when illumination efficiency is considered. When the aperture 18 is formed at a position distant from the LEDs by more than the length L, the portion of the light guide plate 8 directly under the aperture 18 is out of the range of the dark area B. The size and position of the small display panel may change, depending of each embodiment. However, if the small display panel is disposed within the area of the maximum aperture, uniform illumination for the small display panel can be achieved. Thus, there is provided a power-conservative double-faced lighting device still capable of uniform illumination.

In operation, when the case 4 of the electronic equipment, a portable telephone for example, is closed, power is applied to the two LEDs 10b for the small display panel 3 to light the LEDs. When the case is opened, four LEDs 10a for the large display panel 2 and the LEDs 10b are lighted. The light rays emitted from the LEDs 10a or 10b enter the light guide plate 8 and travel in the light guide plate. The light rays in the light guide plate 8 are reflected by the reflecting surfaces 11 and are uniformly emitted out of the light guide plate in the upper and lower directions. Since each of the reflecting surfaces 11 comprises a plurality of scalene microprisms, the quantity of light emitted out from the upper and lower surfaces are substantially equal with each other. While a part of the light is discharged from the light guide plate 8, most of light rays are discharged from the light guide plate 8 to back-light the undersides of the large display panel 2 and the small display panel 3. Light rays discharged from the light guide plate 8 in an oblique direction are reflected by the prisms 19 so that the light rays perpendicularly strike the large and small display panels 2 and 3, thereby increasing the brightness of the display panels.

In the conventional lighting device, the same number of LEDs is operated for the small display panel 3 as well as for the large display panel 2 so that the power required to light all LEDs is large. To the contrary, the number of LEDs required for illuminating the small display panel 3 can be decreased in the present embodiment by providing another circuit separate from that for the large display panel, thereby enabling to restrain the power consumption.

Moreover, since the brightness enhancement films 15 and 16 have the same size as that of the light guide plate 8, the brightness enhancement film 16 is not shown on the large display 2. Hence both display panels can be uniformly back-lighted.

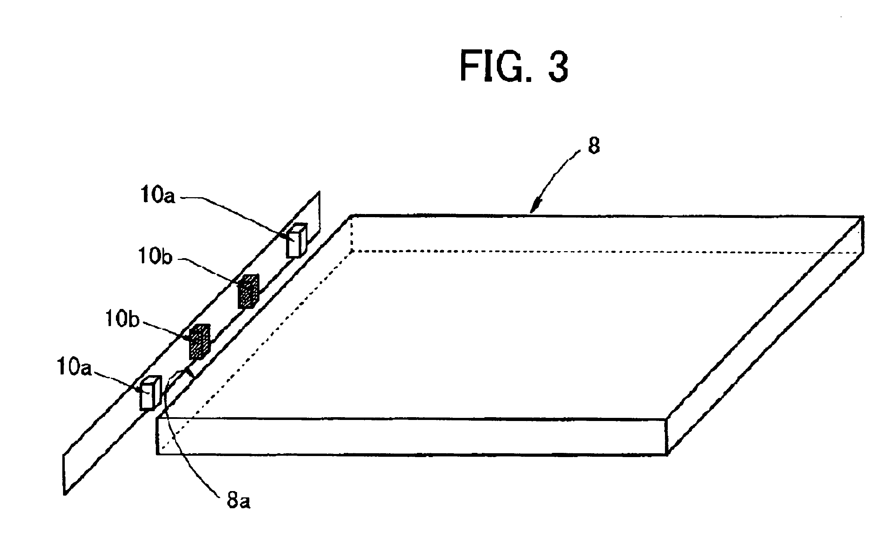

Fig. 3 is a perspective view showing a second embodiment of the present invention where four LEDs, namely two LEDs 10a for the large display panel 2 and two LEDs 10b for the small display panel 3, are equidistantly disposed.

The LEDs 10a and 10b are disposed as shown by examples (1) to (4) in Fig. 5a. The LEDs 10a and 10b are connected in series as shown in Fig. 5b.

When illuminating the large display panel 2, the contact A is closed, thereby lighting all of the four LEDs, and when illuminating the small display panel 3, the contact B is closed so that two LEDs 10b are lighted.

In operation, when the case 4 of the electronic equipment 1 is closed, the contact B is closed so that power is applied to the two LEDs 10b for the small display panel 3 to light the LEDs. When the case is opened, the contact A is closed so that four LEDs 10a and 10b are lighted to illuminate the large display panel 2.

Other constructions and operations of the lighting device is the same as those of the first embodiment.

Accordingly, in the present embodiment, the overall number of the LEDs can be reduced so that the manufacturing cost is decreased.

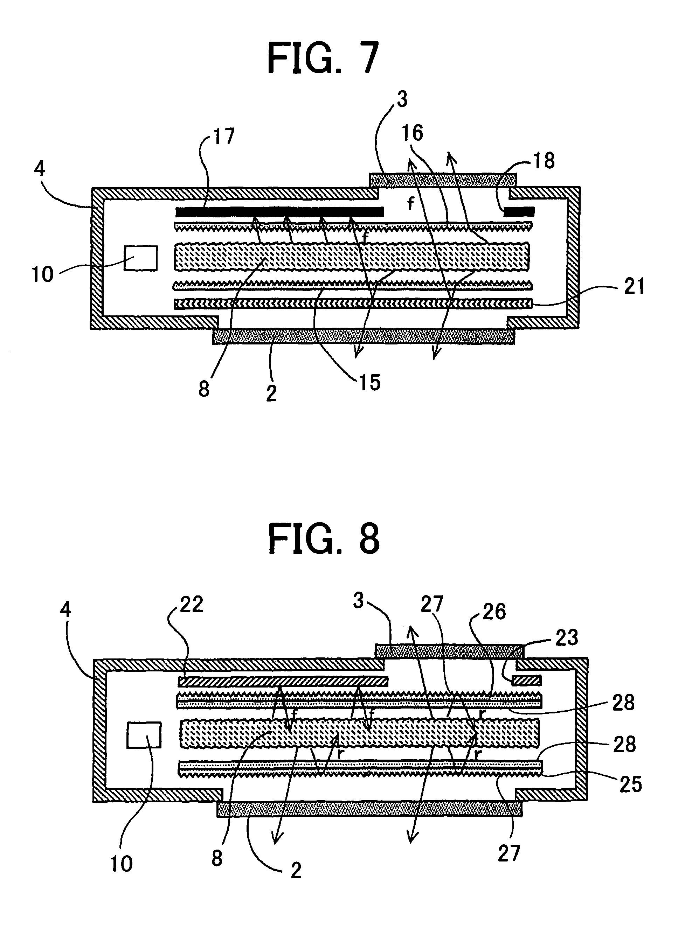

Fig. 7 is a sectional side view of an electronic equipment provided with a lighting device of the third embodiment of the present invention.

The lighting device is provided with a half-silvered mirror sheet 21 as a semi-transmission reflection sheet which is disposed between the large display panel 2 and the brightness enhancement film 15. Other parts are the same as those of Fig. 1, and the same parts as Fig. 1 are identified by the same reference numerals as Fig. 1.

In the half-silvered mirror sheet 21, the intensity of transmission light is equal to the intensity of reflection light. The transmission light having reduced intensity illuminates the large display panel 2.

On the other hand, reflected light rays f are added to light rays applied to the small display panel 3. Therefore, the small display panel 3 is illuminated by light having high intensity. Thus, the intensity of light rays applied to both display panels can be largely changed. For example, it is preferable to use the small size light guide plate for brightly lighting an underside small display panel of a portable telephone.

Fig. 8 is a sectional side view of an electronic equipment provided with a lighting device of a fourth embodiment of the present invention.

In the lighting device, a light absorbing sheet 22 is provided instead of the light absorbing black sheet 17 in the first to third embodiments. The light absorbing sheet 22 is disposed between the light guide plate 8 and the small display panel 3. The light absorbing sheet is made of PET and has gray color. The light absorbing sheet 22 has a size substantially the same as that of the large display panel 2 and has an aperture 23 corresponding to the small display panel 3.

The light absorbing gray sheet 22 has a function to absorb a part of light rays and to reflect the other part.

Furthermore, each of the brightness enhancement films 15 and 16 in the first and second embodiments are changed into a brightness enhancement double film 25 and a brightness enhancement double film 26. Each of the brightness enhancement double films 25 and 26 has a plurality of prisms 27 on the side facing the display panel 2 (3) and prisms 28 on the side facing the light guide plate 8, elongating in the perpendicular direction to the direction of the prisms 27.

Incident light rays in the brightness enhancement double films 25 and 26 are reflected by the outside prisms 27 to be returned as recycle light r. On the other hand, the reflected light f from the light absorbing sheet 22 strike the light guide plate 8. The light absorbing efficiency of the light absorbing sheet 22 is set to such a value that the intensity of the reflected light f from the light absorbing sheet 22 balances with the intensity of the recycle light r. Therefore, the brightness of the surface of the large display panel 2 is uniformly distributed.

In addition, outside prisms 27 of the brightness enhancement double films 25 and 26 act to reduce the projection angle of the illuminating light for the display panels 2 and 3 by the prism operation, thereby improving the backlighting effect to the display panels. Since the prisms 27 and 28 are perpendicularly disposed with each other, light rays in the longitudinal direction and the lateral direction of the case 4 are condensed so that the backlight effect is more improved.

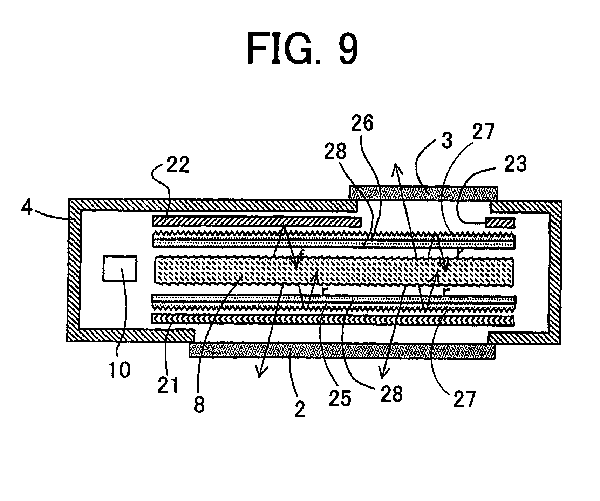

Fig. 9 is a sectional side view of an electronic equipment provided with a lighting device of a fifth embodiment of the present invention.

In the lighting device, the half-silvered mirror sheet 21 of the third embodiment of Fig. 7 is provided between the large display panel 2 and the brightness enhancement double film 25 of the fourth embodiment of Fig. 8. Other parts are the same as those of the lighting device of Fig. 8, and identified by the same reference numerals as Fig. 8.

Similar to the fourth embodiment, the brightness of the large display panel 2 is uniformly distributed.

Furthermore, since the half-silvered mirror sheet 21 is provided, the brightness of the large display panel 2 reduces, the brightness of the small display panel 3 increases by the reflection light from the half-silvered mirror sheet 21 instead. Thus, the brightness of both display panels can be largely controlled.

In the second and fourth embodiments, the half-silvered mirror sheet 21 can be replaced with a white diffusion sheet of half transmissive type, which has the same effect as the half-silvered mirror sheet.

Further, instead of the light absorbing sheets 17 and 22, it is possible to change a part of the case 4 corresponding to the sheet 17 (22) into a surface having the same function as the light absorbing sheet.

In accordance with the present invention, two electric circuits are provided to separately drive the LEDs for the large display panel and the LEDs for the small display panel so that the power consumption is restrained. In addition, since the brightness enhancement films for the small display panels has the same size as that of the light guide plate, the reflection of the brightness enhancement film is not projected on the large display panel. Accordingly, both display panels are evenly illuminated.

While the invention has been described in conjunction with preferred specific embodiment thereof, it will be understood that this description is intended to illustrate and not limit the scope of the invention, which is defined by the following claims.

## Claims

1. A double-faced lighting device comprising:
a case having a first display panel and a second display panel provided on both sides thereof and disposed back to back;
a light guide plate provided in the case and having light emitting surfaces on both sides thereof;
light sources provided at one of sides of light guide plate;
the light sources being divided into a first light source for the first display panel and a second light source for the second display panel;
an electric current supply circuit for independently supplying electric current to the first light source and to the second light source.

2. The lighting device according to claim 1 wherein each of the light sources comprises an LED, and one of LEDs in the second light source is disposed between LEDs of the first light source.

3. The lighting device according to claim 1 or 2 wherein the electric current supply circuit includes a first switch and a second switch, both the switches are operated by opening and closing of the case for supplying electric currents to the first and second light sources respectively.

4. The lighting device according to any one of claims 1 to 3 further comprising brightness enhancement films each having a plurality of prisms on a surface thereof and a size which is substantially equal to a size of the light guide plate, and at least one brightness enhancement film is disposed between the first display panel and one of the light emitting surfaces of the light guide plate, and at least one brightness enhancement film is disposedbetween the second display panel and the other light emitting surface of the light guide plate.

5. The lighting device according to any one of claims 1 to 4 further comprising a light absorbing sheet disposed between the second display panel and the brightness enhancement film, and the light absorbing sheet having an aperture which has a size substantially equal to a size of the second display panel.

6. The lighting device according to claim 5 wherein the prisms of each brightness enhancement film faces an adjacent light emitting surface of the light guide plate respectively, and the light absorbing sheet has a black color.

7. The lighting device according to claim 5 wherein the prisms of each brightness enhancement film faces the adjacent first and second display panels respectively.

8. The lighting device according to claim 7 wherein each of the brightness enhancement films comprises two stacked films in which prisms on both films are elongated in perpendicular directions with each other.

9. The lighting device according to any one of claims 1 to 8 further comprising a semi-transmission reflection sheet provided between the first display panel and the light guide plate.

10. The lighting device according to claim 9 wherein the semi-transmission reflection sheet is a half-silvered mirror sheet.

11. The lighting device according to claim 9 wherein the semi-transmission reflection sheet is a white diffusion sheet.
